# EUROPEAN PATENT APPLICATION

(11) **EP 4 269 743 A1**
(43) Date of publication of application: **01.11.2023**
(21) Application number: 21910913.9
(22) Date of filing: 22.12.2021
(51) Int. Cl.: E06B 9/264, E06B 9/386, E06B 5/00, H02S 20/26, H02S 20/30

(54) **BLIND DEVICE**

(30) Priority: 24.12.2020 JP 2020214899
(71) Applicant: Kyocera Corporation, Kyoto-shi, Kyoto 612-8501 (JP)
(72) Inventor: MIYAMICHI, Yusuke, Kyoto-shi, Kyoto 612-8501 (JP); TAKAHASHI, Masaya, Kyoto-shi, Kyoto 612-8501 (JP); HIROHASHI, Takeru, Kyoto-shi, Kyoto 612-8501 (JP)
(74) Representative: TBK
(86) International application number: PCT/JP2021/047721
(87) International publication number: WO 2022/138773

(57) **Abstract**

A blind apparatus includes a slat on which a photovoltaic cell is disposed, and a communicator configured to perform communication between the blind apparatus and a control device configured to control the blind apparatus. An information element included in a message used in the communication includes an information element for specifying an operating state of the blind apparatus. The operating state includes at least one selected from the group consisting of a first operating state in which an angle of the slat is adjusted to maximize generated power of the photovoltaic cell, a second operating state in which the angle of the slat maximizing the generated power of the photovoltaic cell is searched for, and a third operating state in which the angle of the slat is adjusted based on an illuminance and/or a temperature of a space in which the blind apparatus is installed.

## Description

### TECHNICAL FIELD

The present disclosure relates to a blind apparatus.

### BACKGROUND OF INVENTION

A technology has recently been proposed in which photovoltaic (PV) cells are disposed on the surfaces of slats in a blind apparatus including the slats. Regarding such a technology, a technology for protecting, from damage, a lead wire for drawing power from the PV cells has also been proposed (e.g., Patent Document 1).

When the above-described blind apparatus is controlled, communication between the blind apparatus and a control device (e.g., energy management system (EMS)) that controls the blind apparatus is necessary. In particular, a case is also expected in which the control device and the blind apparatus are provided by different entities.

Under such circumstances, the inventors have found as a result of intensive study that it is necessary to appropriately define an information element included in a message used in communication between the control device and the blind apparatus in order to appropriately control the blind apparatus.

### CITATION LIST

### PATENT LITERATURE

Patent Document 1: WO 2020/116413

### SUMMARY

The gist of a first feature is a blind apparatus including a slat on which a photovoltaic cell is disposed, and a communicator configured to perform communication between the blind apparatus and a control device configured to control the blind apparatus, wherein an information element included in a message used in the communication includes an information element for specifying an operating state of the blind apparatus, and the operating state includes at least one selected from the group consisting of a first operating state in which an angle of the slat is adjusted to maximize generated power of the photovoltaic cell, a second operating state in which the angle of the slat maximizing the generated power of the photovoltaic cell is searched for, and a third operating state in which the angle of the slat is adjusted based on an illuminance and/or a temperature of a space in which the blind apparatus is installed.

The gist of a second feature is a blind apparatus including a slat on which a photovoltaic cell is disposed, and a communicator configured to perform communication between the blind apparatus and a control device configured to control the blind apparatus, wherein an information element included in a message used in the communication includes an information element for specifying an abnormal state of the blind apparatus, and the abnormal state includes at least one selected from the group consisting of a first abnormal state caused by a temperature of a space in which the blind apparatus is installed, a second abnormal state caused by shaking of the slat and/or an impact to the slat, and a third abnormal state caused by contact with the slat and/or deformation of the slat.

The gist of a third feature is a blind apparatus including a slat on which a photovoltaic cell is disposed, and a communicator configured to perform communication between the blind apparatus and a control device configured to control the blind apparatus, wherein an information element included in a message used in the communication includes an information element for specifying a grid interconnection state indicating whether the photovoltaic cell is interconnected with a power grid.

### BRIEF DESCRIPTION OF THE DRAWINGS

FIG. 1 is a diagram illustrating a power management system 100 according to an embodiment.
FIG. 2 is a diagram illustrating a facility 300 according to the embodiment.
FIG. 3 is a diagram illustrating a blind apparatus 340 according to the embodiment.
FIG. 4 is a diagram illustrating a local control device 360 according to the embodiment.
FIG. 5 is a diagram showing message examples according to the embodiment.
FIG. 6 is a diagram for describing an operation example according to the embodiment.
FIG. 7 is a diagram for describing the operation example according to the embodiment.
FIG. 8 is a diagram for describing the operation example according to the embodiment.

### DESCRIPTION OF EMBODIMENTS

Embodiments will be described below with reference to the accompanying drawings. Note that in the following description of the drawings, the same or similar components will be denoted by the same or similar reference signs. However, the drawings are schematic.

### Embodiment

### Power Management System

A power management system according to an embodiment will be described below.

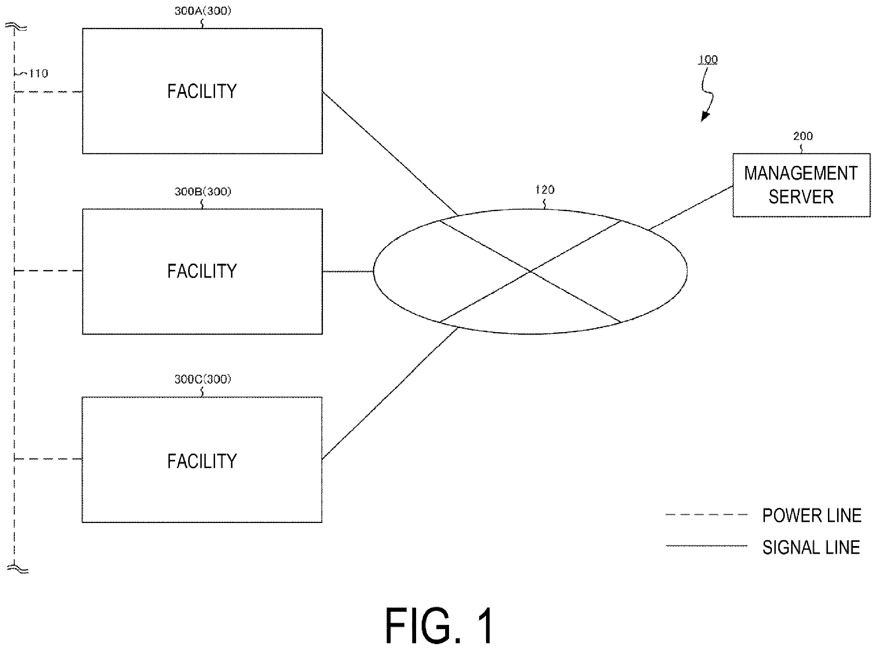

As illustrated in FIG. 1, a power management system 100 includes a management server 200 and facilities 300. In FIG. 1, facilities 300A to 300C are illustrated as examples of the facilities 300.

Each facility 300 is connected to a power grid 110. In the following description, the flow of power from the power grid 110 to the facility 300 is referred to as power flow, and the flow of power from the facility 300 to the power grid 110 is referred to as reverse power flow. Power flowing from the power grid 110 to the facility 300 may be referred to as demanded power. Demanded power may also be a concept including power reversely flowing from the facility 300 to the power grid 110. In such a case, the flow power may be expressed as a positive value, and the reverse flow power may be expressed as a negative value.

The management server 200 and the facility 300 are connected to a network 120. The network 120 is only required to provide a line between the management server 200 and the facility 300. For example, the network 120 may include the Internet. The network 120 may include a dedicated line such as a virtual private network (VPN).

The management server 200 is an example of a power management server that adjusts the supply-demand balance of the power grid 110. The management server 200 is a server managed by a business operator, such as a power generation operator, a power transmission and distribution operator, a retailer, or a resource aggregator. The resource aggregator is an electric power provider that provides the reverse flow power to the power generation operator, the power transmission and distribution operator, the retailer, and the like in a virtual power plant (VPP). The resource aggregator may be an electric power provider that generates reduced power of the flow power (power consumption) of the facility 300 managed by the resource aggregator.

The management server 200 transmits, to a local control device 360 provided in the facility 300, a control message instructing control of a distributed power supply (e.g., a photovoltaic cell apparatus 310, a power storage apparatus 320, or a fuel cell apparatus 330) provided in the facility 300. For example, the management server 200 may transmit a power flow control message requesting control of the power flow or may transmit a reverse power flow control message requesting control of the reverse power flow. The management server 200 may transmit a power supply control message for controlling an operating state of the distributed power supply. A degree of control of the power flow or the reverse power flow may be expressed as an absolute value (e.g., XX kW) or may be expressed as a relative value (e.g., XX%). The degree of control of the power flow or the reverse power flow may be expressed by using two or more levels. The degree of control of the power flow or the reverse power flow may be expressed as a power rate (real time pricing (RTP)) determined according to a current power supply-demand balance or may be expressed as a power rate (time of use (TOU)) determined according to a past power supply-demand balance.

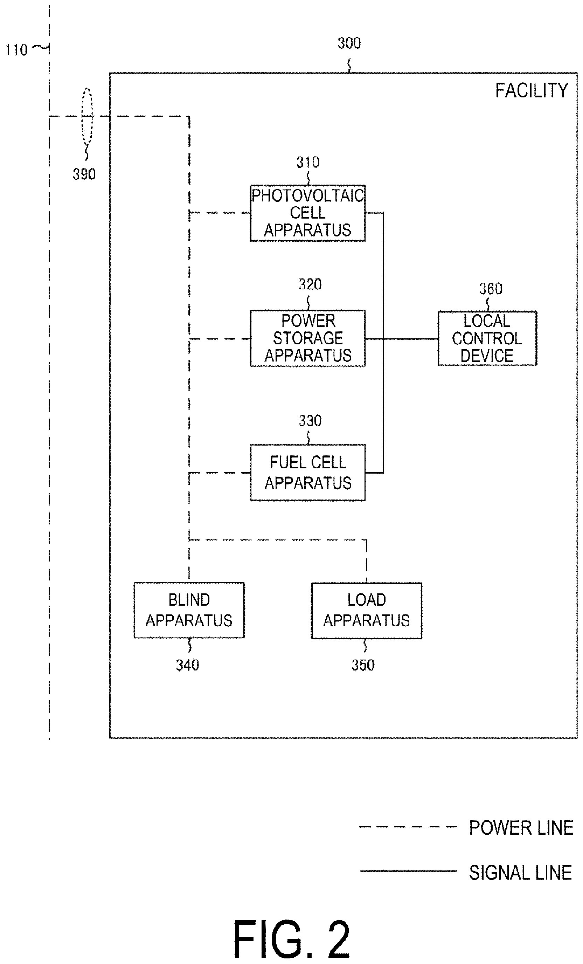

As illustrated in FIG. 2, the facility 300 includes the photovoltaic cell apparatus 310, the power storage apparatus 320, the fuel cell apparatus 330, a blind apparatus 340, a load apparatus 350, the local control device 360, and a measurement apparatus 390.

The photovoltaic cell apparatus 310 is a distributed power supply that generates power in response to sunlight or other light. The photovoltaic cell apparatus 310 may be an example of the distributed power supply used in the VPP. For example, the photovoltaic cell apparatus 310 includes a power conditioning system (PCS) and a solar panel.

The power storage apparatus 320 is a distributed power supply that charges and discharges the power. The power storage apparatus 320 may be an example of the distributed power supply used in the VPP. For example, the power storage apparatus 320 includes a PCS and a power storage cell.

The fuel cell apparatus 330 is a distributed power supply that generates power using fuel. The fuel cell apparatus 330 may be an example of the distributed power supply used in the VPP. For example, the fuel cell apparatus 330 includes a PCS and a fuel cell.

For example, the fuel cell apparatus 330 may be a solid oxide fuel cell (SOFC), a polymer electrolyte fuel cell (PEFC), a phosphoric acid fuel cell (PAFC), or a molten carbonate fuel cell (MCFC).

The blind apparatus 340 is an apparatus attached to a window or the like and can block sunlight from entering a space in which the blind apparatus 340 is installed. The blind apparatus 340 may be attached to the window inside or outside of the space in which the blind apparatus 340 is installed. Specifically, the blind apparatus 340 includes a plurality of slats and controls the plurality of slats through a motor or the like.

Each slat has a rectangular front surface and a rectangular back surface. The rectangular front surface may be a convex surface curved slightly outward (hereinafter, convex surface). The rectangular back surface may be a concave surface curved slightly inward (hereinafter, concave surface). The control of the slats may include control of at least one selected from the group consisting of raising the slats, lowering the slats, and adjusting the angles of the slats. The control of the slats may include control of a part of the plurality of slats. That is, the control of the slats may include control of a predetermined number of slats among the plurality of slats.

The blind apparatus 340 may be of a horizontal type in which slats horizontally extending relative to a ground surface or a floor surface are vertically arranged relative to the ground surface or the floor surface, or may be of a vertical type in which slats vertically extending relative to the ground surface or the floor surface are horizontally arranged relative to the ground surface or the floor surface. The blind apparatus 340 may be referred to as an electric blind. The blind apparatus 340 may be referred to as a PV-equipped electric blind.

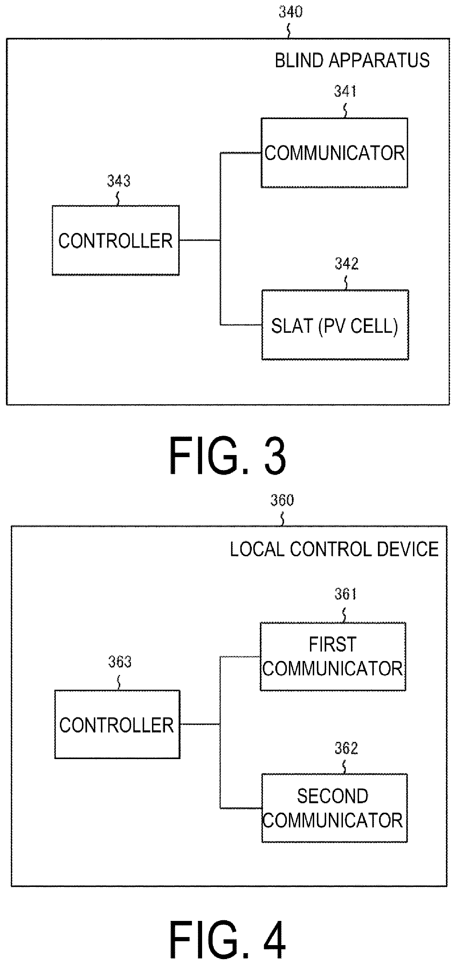

In the embodiment, the blind apparatus 340 includes slats on each of which a photovoltaic cell (hereinafter, referred to as a PV cell) is disposed. The PV cell is disposed on a surface of the slat. Specifically, the PV cell is disposed on a convex surface of the slat. The PV cell may be disposed on a concave surface of the slat or on both the convex and concave surfaces of the slat. The blind apparatus 340 may be considered as an example of the distributed power supply that generates power in response to light such as sunlight. The blind apparatus 340 may or may not include a PCS. The PCS of the photovoltaic cell apparatus 310 may be used as the PCS of the PV cell disposed on the slat. The blind apparatus 340 will be described in detail below (see FIG. 3).

The load apparatus 350 is an apparatus that consumes power. For example, the load apparatus 350 is an air conditioning apparatus, an illumination apparatus, an audio visual (AV) apparatus, or the like.

The local control device 360 is an example of a control device controlling the blind apparatus 340. The local control device 360 may be a device (energy management system (EMS)) managing the power of the facility 300. The local control device 360 may control an operating state of the photovoltaic cell apparatus 310, an operating state of the power storage apparatus 320, or an operating state of the fuel cell apparatus 330. The local control device 360 may control an operating state of the blind apparatus 340 or an operating state of the load apparatus 350. The local control device 360 will be described in detail below (see FIG. 4). The local control device 360 may also control two or more apparatuses selected from the above-described apparatuses.

The measurement apparatus 390 is an example of a measurement apparatus measuring power related to the facility 300. The measurement apparatus 390 may measure the flow power from the power grid 110 to the facility 300 as the power related to the facility. That is, the electric power related to the facility 300 may be considered as the demanded power of the facility 300. The measurement apparatus 390 may measure the reverse flow power from the facility 300 to the power grid 110 as the power related to the facility. A value measured by the measurement apparatus 390 may be referred to as a measurement value. The measurement apparatus 390 may transmit a message including an information element indicating the power related to the facility 300 at a first cycle (e.g., one minute). The measurement apparatus 390 may transmit the message to the local control device 360 or to the management server 200. The measurement apparatus 390 may autonomously transmit the message or may transmit the message in response to a request from a transmission target. The measurement apparatus 390 may be a smart meter belonging to a business operator managing the power grid 110.

In the embodiment, communication between the management server 200 and the local control device 360 is performed in accordance with a first protocol. On the other hand, communication between the local control device 360 and the distributed power supply (the photovoltaic cell apparatus 310, the power storage apparatus 320, or the fuel cell apparatus 330) is performed in accordance with a second protocol different from the first protocol. A protocol based on open automated demand response (ADR) or a unique dedicated protocol can, for example, be used as the first protocol. A protocol based on ECHONET Lite, smart energy profile (SEP) 2.0, KNX, or a unique dedicated protocol can, for example, be used as the second protocol. For example, both the first protocol and the second protocol may be unique dedicated protocols made having different rules. However, the first protocol and the second protocol may also be made having the same rules.

### Blind Apparatus

The blind apparatus according to the embodiment will be described below. As illustrated in FIG. 3, the blind apparatus 340 includes a communicator 341, slats 342, and a controller 343.

The communicator 341 includes a communication module. The communication module may be a wireless communication module conforming to standards such as IEEE 802.11a/b/g/n, ZigBee, Wi-SUN, LTE, and 5G, or may be a wired communication module conforming to a standard such as IEEE 802.3.

For example, the communicator 341 controls communication between the blind apparatus 340 and the local control device 360. In other words, the communicator 341 communicates with the local control device 360. Such communication is performed using a protocol based on the second protocol. Hereinafter, ECHONET Lite will be mainly described as an example of the second protocol.

Firstly, the information element included in the message used in communication may include an information element for specifying the operating state of the blind apparatus 340. The operating state may include at least one selected from the group consisting of a first operating state, a second operating state, and a third operating state.

The first operating state is an operating state in which the angles of the slats 342 are adjusted to maximize generated power of the PV cells. That is, in the first operating state, the generated power of the PV cells is prioritized over sunlight entering the space in which the blind apparatus 340 is installed.

The second operating state is an operating state in which the angles of the slats 342 maximizing the generated power of the PV cells are searched for. Specifically, in the second operating state, the angles of the slats 342 maximizing the generated power of the PV cells are searched for by measuring the generated power of the PV cells while gradually changing the angles of the slats 342. The slats 342 whose angles are changed in a scan mode may be a part of the plurality of slats 342 provided in the blind apparatus 340.

As described above, the third operating state is an operating state in which the angles of the slats 342 are adjusted based on an illuminance and/or a temperature of the space in which the blind apparatus 340 is installed. Specifically, in the third operating state, the angles of the slats 342 may be adjusted such that the illuminance of the space in which the blind apparatus 340 is installed reaches a target illuminance. A sensor that detects the illuminance may be provided in the blind apparatus 340 or may be configured to be able to communicate with the blind apparatus 340. The target illuminance may be set by the user. In the third operating state, the angles of the slats 342 may be adjusted such that the temperature of the space in which the blind apparatus 340 is installed reaches a target temperature. A sensor that detects the temperature may be provided in the blind apparatus 340 or may be configured to be able to communicate with the blind apparatus 340. The target temperature may be set by the user.

Such a message may include a message (e.g., SET command) instructing that the blind apparatus 340 be controlled in the operating state or a message (e.g., GET command) requesting the operating state applied to the blind apparatus 340. Such a message may include a message (e.g., GET response command, INF command) for a notification of the operating state applied to the blind apparatus 340. The GET response command is a command transmitted in response to the GET command, and the INF command is a message autonomously transmitted by the blind apparatus 340.

Note that the SET command includes an information element for the blind apparatus 340 to specify the operating state of the blind apparatus 340. The GET response command and the INF command include an information element for the local control device 360 to specify the operating state of the blind apparatus 340.

Secondly, the information element included in the message used in the communication may include an information element for specifying an abnormal state of the blind apparatus 340. The abnormal state may include at least one selected from the group consisting of a first abnormal state, a second abnormal state, and a third abnormal state.

The first abnormal state is an abnormal state caused by the temperature of the space in which the blind apparatus 340 is installed. Specifically, the blind apparatus 340 may determine that the first abnormal state occurs when the temperature of the space in which the blind apparatus 340 is installed exceeds a threshold value. For example, the first abnormal state may be an abnormal state occurring when the temperature exceeds the threshold value due to a fire or the like. A sensor that detects the temperature may be provided in the blind apparatus 340 or may be configured to be able to communicate with the blind apparatus 340.

The second abnormal state is an abnormal state caused by shaking of the slats 342 and/or an impact to the slats 342. The blind apparatus 340 may determine that the second abnormal state occurs when shaking of the slats 342 and/or an impact to the slats 342 is detected. For example, the second abnormal state may be an abnormal state occurring when wind or the like shakes the slats 342. A sensor that detects shaking and/or an impact may be provided in the blind apparatus 340 or may be configured to be able to communicate with the blind apparatus 340.

The third abnormal state is an abnormal state caused by contact with the slats 342 and/or deformation of the slats 342. The blind apparatus 340 may determine that the third abnormal state occurs when contact with the slats 342 and/or deformation of the slats 342 is detected. For example, the third abnormal state may be an abnormal state occurring when the user touches the slats 342. A sensor that detects shaking and/or an impact may be provided in the blind apparatus 340 or may be configured to be able to communicate with the blind apparatus 340.

Such a message may include a message (e.g., GET command) requesting the abnormal state occurring in the blind apparatus 340. Such a message may include a message (e.g., GET response command, INF command) for a notification of the abnormal state occurring in the blind apparatus 340. The GET response command is a command transmitted in response to the GET command, and the INF command is a message autonomously transmitted by the blind apparatus 340.

Note that the GET response command and the INF command include an information element for the local control device 360 to specify the abnormal state of the blind apparatus 340.

Thirdly, the information element included in the message used in the communication may include an information element for specifying a grid interconnection state indicating whether the PV cells are interconnected with the power grid 110.

The grid interconnection state may include a state in which the PV cells are interconnected with the power grid 110 (e.g., grid interconnection) or a state in which the PV cells are disconnected from the power grid 110 (e.g., independent). The state in which the PV cells are interconnected with the power grid 110 may include a state in which the reverse power flow of the output power of the PV cells is permitted (e.g., grid interconnection (reverse power flow is possible)) or a state in which the reverse power flow of the output power of the PV cells is not permitted (e.g., grid interconnection (reverse power flow is impossible)). The grid interconnection state may include a state in which it is unknown whether the PV cells are interconnected with the power grid 110 (e.g., unknown).

Such a message may include a message requesting the grid interconnection state (e.g., GET command). Such a message may include a message (e.g., GET response command, INF command) for a notification of the grid interconnection state. The GET response command is a command transmitted in response to the GET command, and the INF command is a message autonomously transmitted by the blind apparatus 340.

Note that the GET response command and the INF command include an information element for the local control device 360 to specify the grid interconnection state.

The slats 342 are members for adjusting sunlight entering the space in which the blind apparatus 340 is installed. The PV cell may be disposed on the surface of each slat 342.

The controller 343 may include at least one processor. The at least one processor may include a single integrated circuit (IC) or a plurality of circuits (such as integrated circuits and/or discrete circuits) connected communicably with one another. The controller 343 may be referred to as a first controller.

For example, the controller 343 may execute control of at least one selected from the group consisting of raising the slats 342, lowering the slats 342, and adjusting the angles of the slats 342. The controller 343 may control a part of the plurality of slats 342. That is, the controller 343 may control a predetermined number of slats among the plurality of slats. The controller 343 may control any one of the first operating state, the second operating state, and the third operating state. The controller 343 may detect any one of the first abnormal state, the second abnormal state, and the third abnormal state.

### Local Control Device

A local control device according to the embodiment will be described below. As illustrated in FIG. 4, the local control device 360 includes a first communicator 361, a second communicator 362, and a controller 363.

The first communicator 361 includes a communication module. The communication module may be a wireless communication module conforming to standards such as IEEE 802.11a/b/g/n, ZigBee, Wi-SUN, LTE, and 5G, or may be a wired communication module conforming to a standard such as IEEE 802.3.

For example, the first communicator 361 communicates with the management server 200 via the network 120. As described above, the first communicator 361 communicates in accordance with the first protocol. For example, the first communicator 361 receives a first message from the management server 200 in accordance with the first protocol. The first communicator 361 transmits a first message response to the management server 200 in accordance with the first protocol.

The second communicator 362 includes a communication module. The communication module may be a wireless communication module conforming to standards such as IEEE 802.11a/b/g/n, ZigBee, Wi-SUN, LTE, and 5G, or may be a wired communication module conforming to a standard such as IEEE 802.3.

For example, the second communicator 362 communicates with the distributed power supply (the photovoltaic cell apparatus 310, the power storage apparatus 320, or the fuel cell apparatus 330). As described above, the second communicator 362 communicates in accordance with the second protocol. For example, the second communicator 362 transmits a second message to the distributed power supply in accordance with the second protocol. The second communicator 362 receives a second message response from the distributed power supply in accordance with the second protocol.

As described above, the second message may be a message including an information element for specifying the operating state of the blind apparatus 340, a message including an information element for specifying the abnormal state occurring in the blind apparatus 340, or a message including an information element for specifying the grid interconnection state indicating whether the PV cells are interconnected with the power grid 110.

The controller 363 may include at least one processor. The at least one processor may include a single integrated circuit (IC) or a plurality of circuits (such as integrated circuits and/or discrete circuits) connected communicably with one another. The controller 363 may be referred to as a second controller.

For example, the controller 363 controls each component provided in the local control device 360. Specifically, the controller 363 instructs the blind apparatus 340 to set the operating state by transmitting the second message and receiving the second message response. The controller 363 may instruct the blind apparatus 340 to report the abnormal state by transmitting the second message and receiving the second message response.

### Messages

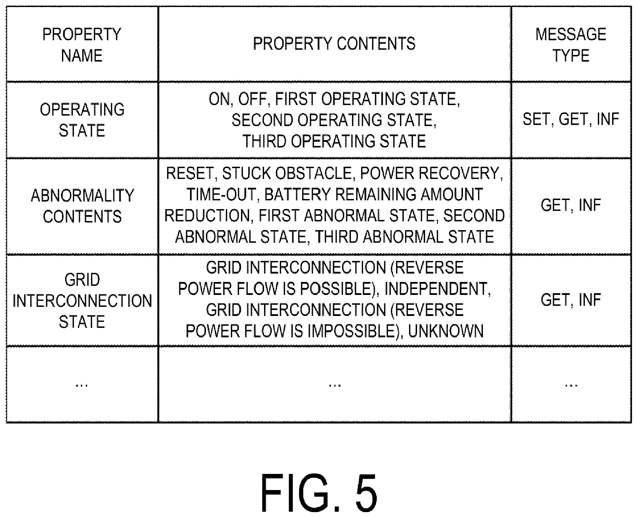

Messages according to the embodiment will be described below. The messages used in the communication between the blind apparatus 340 and the local control device 360 will be described. Although the messages related to the disclosure will be mainly described with reference to FIG. 5, messages including other information elements may also be defined.

As illustrated in FIG. 5, each message is defined by a property name, property contents, and a message type. The property name is the name of a property adopted in the blind apparatus 340. The property contents are the contents of the property adopted in the blind apparatus 340. The message type is the message type (command type such as SET, GET, and INF) to which each property can be applied. The property may be considered as data for distinguishing an information element included in the message. An operating state, abnormality contents, a grid interconnection state, and the like may be defined as the property.

Possible information elements of the operating state may include power-ON of the blind apparatus 340 and power-OFF of the blind apparatus 340. In addition to these information elements, possible information elements of the operating state may include the first operating state, the second operating state, and the third operating state described above.

Possible information elements of the abnormality contents may include reset, stuck obstacle, power recovery, type-out, and battery amount reduction. In addition to these information elements, possible information elements of the abnormality contents may include the first abnormal state, the second abnormal state, and the third abnormal state described above.

Possible information elements of the grid interconnection state may include grid interconnection (reverse power flow is possible), independent, grid interconnection (reverse power flow is impossible), and unknown.

### Operation Example

An operation example according to the embodiment will be described below. Hereinafter, a case will be described as an example in which a protocol used in the communication between the blind apparatus 340 and the local control device 360 is a protocol conforming to ECHONET Lite.

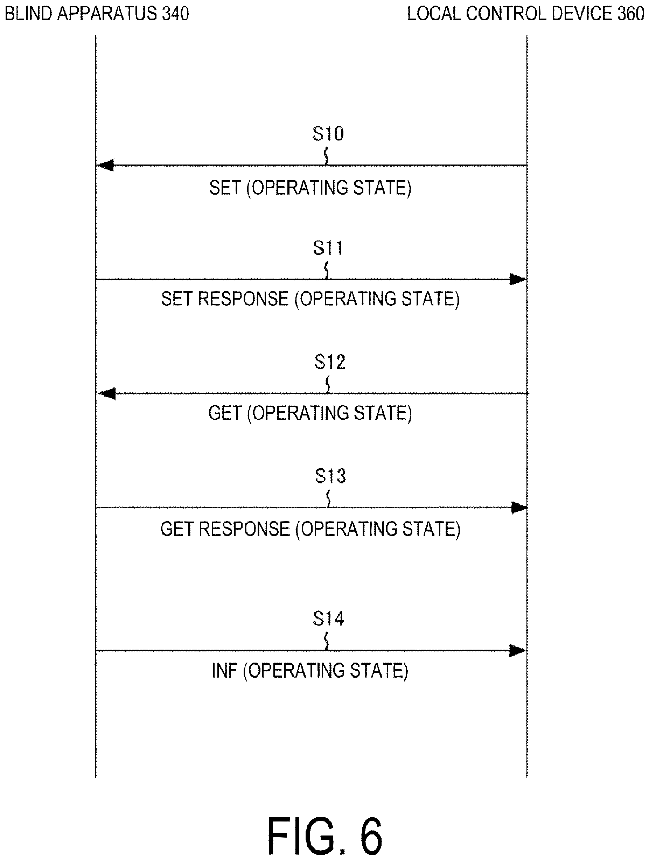

Firstly, a sequence regarding the operating state will be described with reference to FIG. 6.

As illustrated in FIG. 6, in step S10, the local control device 360 transmits, to the blind apparatus 340, the SET command instructing that the blind apparatus 340 be controlled in the operating state. The SET command includes an information element for specifying the operating state to be applied to the blind apparatus 340.

In step S11, the blind apparatus 340 transmits the SET response command in response to the SET command. The SET response command includes an information element indicating that the SET command has been received. The SET response command does not need to include an information element specifying the operating state applied to the blind apparatus 340.

In step S12, the local control device 360 transmits, to the blind apparatus 340, the GET command requesting the operating state applied to the blind apparatus 340.

In step S13, the blind apparatus 340 transmits the GET response command in response to the GET command. The GET response command includes an information element specifying the operating state applied to the blind apparatus 340.

In step S14, the blind apparatus 340 transmits the INF command in response to a predetermined trigger. The INF command includes an information element specifying the operating state applied to the blind apparatus 340. The predetermined trigger may include a periodic trigger and may also include a change in the operating state of the blind apparatus 340. The predetermined trigger may include power failure and power recovery.

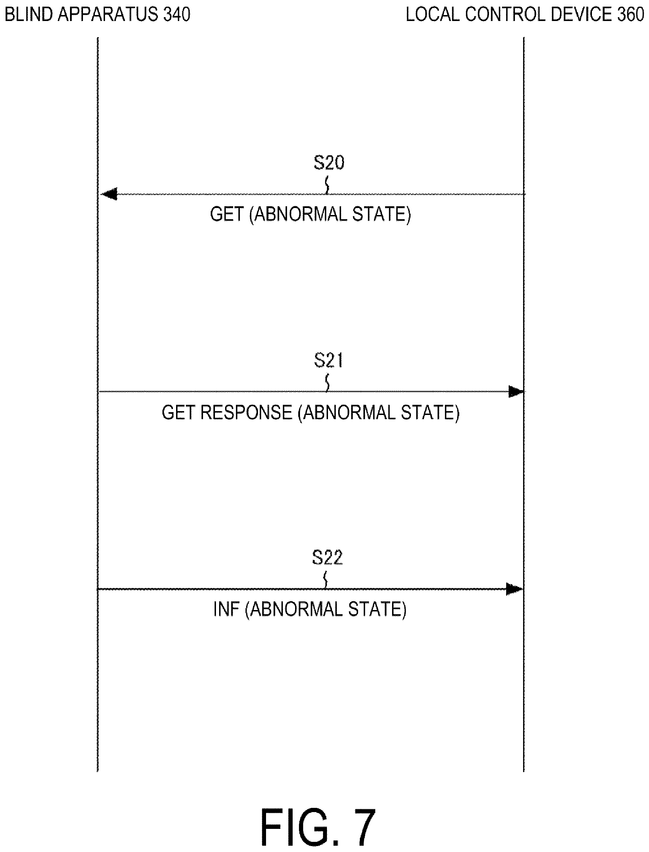

Secondly, a sequence regarding the abnormal state will be described with reference to FIG. 7.

As illustrated in FIG. 7, in step S20, the GET command requesting the abnormal state occurring in the blind apparatus 340 is transmitted to the blind apparatus 340.

In step S21, the blind apparatus 340 transmits the GET response command in response to the GET command. The GET response command includes an information element specifying the abnormal state occurring in the blind apparatus 340.

In step S22, the blind apparatus 340 transmits the INF command in response to a predetermined trigger. The INF command includes an information element specifying the abnormal state occurring in the blind apparatus 340. The predetermined trigger may include a periodic trigger and may also include a change in the abnormal state of the blind apparatus 340. The predetermined trigger may include power failure, power recovery, and the like.

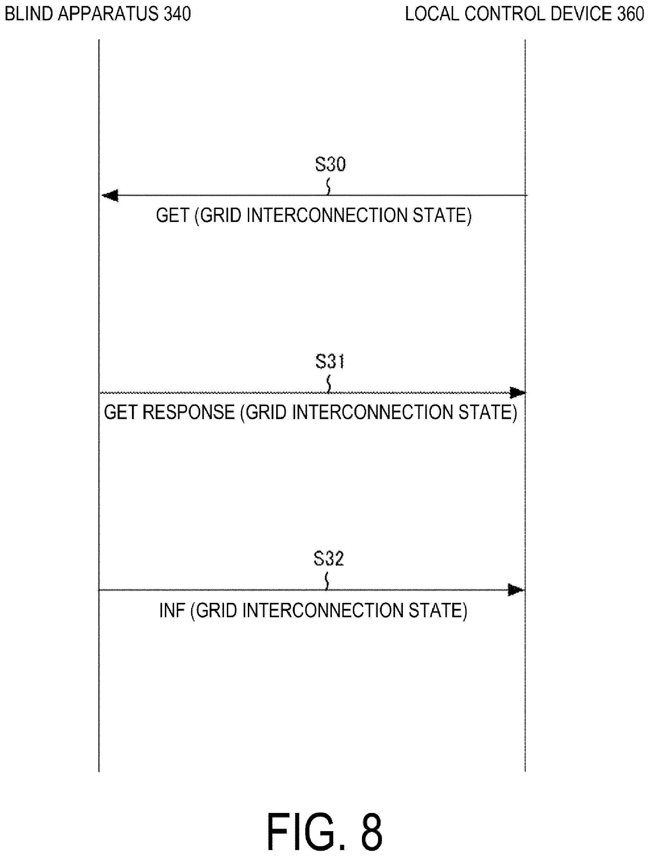

Thirdly, a sequence regarding the grid interconnection state will be described with reference to FIG. 8.

As illustrated in FIG. 8, in step S30, the GET command requesting the grid interconnection state of the blind apparatus 340 is transmitted to the blind apparatus 340.

In step S31, the blind apparatus 340 transmits the GET response command in response to the GET command. The GET response command includes an information element specifying the grid interconnection state of the blind apparatus 340.

In step S32, the blind apparatus 340 transmits the INF command in response to a predetermined trigger. The INF command includes an information element specifying the grid interconnection state of the blind apparatus 340. The predetermined trigger may include a periodic trigger and may also include a change in the abnormal state of the blind apparatus 340. The predetermined trigger may include power failure, power recovery, and the like.

### Functions and Effects

In the embodiment, the blind apparatus 340 communicates, to the local control device 360, a message including an information element for specifying the operating state of the blind apparatus 340. The operating state includes at least one selected from the group consisting of the first operating state, the second operating state, and the third operating state. With such a configuration, it is possible to appropriately control the blind apparatus 340 even when the first operating state, the second operating state, or the third operating state is introduced as a new operating state, taking into account the configuration in which the PV cells are disposed on the slats 342 of the blind apparatus 340.

In the embodiment, the blind apparatus 340 communicates, to the local control device 360, a message including an information element for specifying the abnormal state of the blind apparatus 340. The abnormal state includes at least one selected from the group consisting of the first abnormal state, the second abnormal state, and the third abnormal state. With such a configuration, it is possible to appropriately control the blind apparatus 340 even when the first abnormal state, the second abnormal state, or the third abnormal state is introduced as a new abnormal state, taking into account the configuration in which the PV cells are disposed on the slats 342 of the blind apparatus 340.

In the embodiment, the blind apparatus 340 communicates, to the local control device 360, a message including an information element for specifying the grid interconnection state of the blind apparatus 340. With such a configuration, it is possible to appropriately control the blind apparatus 340, taking into account the configuration in which the PV cells are disposed on the slats 342 of the blind apparatus 340.

### Variation 1

Variation 1 of the embodiment will be described below. Differences from the embodiment will be mainly described below.

In Variation 1, the blind apparatus 340 communicates a message including an information element indicating the generated power of the slats 342. The message may be the above described GET command, GET response command, or INF command.

The information element may include an information element indicating the generated power of each slat 342. The information element may include an information element indicating the generated power of all the slats 342. The information element may include an information element indicating an instantaneous value of the generated power (measured value of instantaneous generated power) or may include an information element indicating a cumulative value of the generated power (measured value of a cumulative generated power).

With such a configuration, the local control device 360 may determine a deterioration state of the slats 342 based on the generated power of the slats 342. Specifically, when the generated power of each slat 342 can be known, the local control device 360 may determine the deterioration state of each slat 342. When the generated power of all the slats 342 can be known, the local control device 360 may determine the deterioration state of all the slats 342.

When the local control device 360 can communicate a message including an information element indicating the generated power of the slats 342, the local control device 360 may also communicate a message described below. For example, the local control device 360 may communicate a message including an information element indicating an open or closed state of the slats 342. The open or closed state of the slats 342 may include a state in which all the slats 342 are raised (open state) and a state in which all the slats 342 are lowered (closed state). The open or closed state of the slats 342 may include a state between the open state and the closed state (i.e., a degree of raising the slats 342 or a degree of lowering the slats 342). The local control device 360 may communicate a message including an information element indicating the angles of the slats 342.

Assuming the above, the blind apparatus 340 may detect the abnormal state of the PV cells disposed on the slats 342 based on the generated power of the slats 342. For example, the blind apparatus 340 may detect the abnormal state of the PV cells disposed on the slats 342 when the generated power of the slats 342 is less than a threshold value regardless of the amount of light (sunlight) the PV cells are irradiated with (sunlight). In such a case, the blind apparatus 340 may communicate a message including an information element indicating the abnormal state in which the generated power of the slats 342 (PV cells) is less than the threshold value. The message may be the above described GET command, GET response command, or INF command.

### Variation 2

Variation 2 of the embodiment will be described below. Differences from the embodiment will be mainly described below. In Variation 2, a case will be described in which the blind apparatus 340 includes a power storage apparatus for driving the slats 342.

In such a case, the blind apparatus 340 may communicate a message including an information element indicating a remaining amount of power stored in the power storage apparatus. The message may be the above described GET command, GET response command, or INF command.

With such a configuration, the local control device 360 can appropriately control the blind apparatus 340 based on the remaining amount of power stored in the power storage apparatus. For example, when the remaining amount of the stored power is less than a threshold value, the local control device 360 can control the blind apparatus 340 to actively generate power using the PV cells disposed on the slats 342.

The blind apparatus 340 may communicate a message including an information element indicating an operating mode of the power storage apparatus. The message may be the above-described SET command, GET command, GET response command, or INF command. The operating mode of the power storage apparatus may include a quick charge mode, a power reception mode, a discharge mode, a standby mode, a test mode, an automatic mode, and the like.

With such a configuration, the local control device 360 can appropriately secure power for driving the slats 342 by setting the operating mode of the power storage apparatus in the blind apparatus 340. For example, when the remaining amount of the stored power is less than a threshold value, the local control device 360 can suppress depletion of power for driving the slats 342 by actively charging the power storage apparatus.

### Other Embodiments

Although the present invention is described through the above-described embodiments, it should not be understood that the description and the drawings, which form a part of this disclosure, limit this invention. Various alternative embodiments, examples, and operational techniques will be apparent from this disclosure to those skilled in the art.

In the above disclosure, the function and operation of the blind apparatus 340 have been mainly described. However, the disclosure described above is not limited thereto. For example, the local control device 360 may instruct the blind apparatus 340 to raise the slats 342 in response to the abnormal state (e.g., the first abnormal state to the third abnormal state) of the blind apparatus 340.

In the above disclosure, the first operating state to the third operating state have been described as examples of the operating state. However, the disclosure described above is not limited thereto. The operating state may include a fourth operating state in which the angles of the slats 342 are fixed at an angle set by the user.

The operating state may include a fifth operating state in which the convex surfaces of the slats 342 on which the PV cells are disposed are fixed to face outward relative to the space in which the blind apparatus 340 is installed. That is, in the fifth operating state, blocking sunlight from entering the space in which the blind apparatus 340 is installed is prioritized over the generated power of the PV cells. As a result, in the daytime, the space in which the blind apparatus 340 is installed can be darkened while sunlight from outside to the space is blocked. In the fifth operating state, since the PV cells face outward, it is possible to obtain power generated through the PV cells being irradiated with sunlight, while sunlight entering the space in which the blind apparatus 340 is installed is blocked.

The operating state may include a sixth operating state in which the convex surfaces of the slats 342 on which the PV cells are disposed are fixed to face inward relative to the space in which the blind apparatus 340 is installed. This makes it difficult for indoor light to leak outside at night from the space in which the blind apparatus 340 is installed. In the sixth operating state, since the PV cells face inward, it is possible to obtain power generated through the PV cells being irradiated with indoor light, while it is difficult for the indoor light to leak outside from the space in which the blind apparatus 340 is installed.

The operating state may include a seventh operating state in which the convex surfaces of the slats 342 are fixed toward a ceiling relative to the space in which the blind apparatus 340 is installed. This enables a large amount of sunlight to enter the space in which the blind apparatus 340 is installed from outside and can thus light up the space. Although the PV cells face the ceiling in the seventh operating state, the PV cells are also irradiated with sunlight from the outside, and it is thus possible to obtain the generated power of the PV cells while a large amount of sunlight enters the space in which the blind apparatus 340 is installed.

The operating state may include an eighth operating state in which the slats 342 are rotated 90 degrees or 270 degrees relative to the angles of the slats 342 maximizing the generated power of the PV cells. Thus, since sunlight from outside is hardly reflected by the slats 342, the sunlight can directly enter and warm the space.

The operating state may include a ninth operating state in which a predetermined number of slats 342 among the plurality of slats 342 stacked in one direction and stored are lowered. For example, when the blind apparatus 340 includes ten slats 342, the ninth operating state is a state in which seven of the ten slats 342 are lowered. In this case, the remaining three slats 342 are in a stacked state.

The ninth operating state may include a state in which all the slats 342 of the blind apparatus 340 are lowered or may include a state in which none of the slats 342 are lowered. The predetermined number may be the number of slats counted from the top or from the bottom in a state in which all the slats 342 of the blind apparatus 340 are lowered. This makes it possible to know, among the plurality of slats 342, which PV cells frequently generate power and which PV cells infrequently generate power, which leads to improvement in maintenance of the blind apparatus 340.

Instead of the predetermined number, a ratio with respect to all of the plurality of slats 342 of the blind apparatus 340 may be used.

In the above disclosure, ECHONET Lite has been mainly described. However, the disclosure described above is not limited thereto. The above disclosure is also applicable to other protocols such as SEP 2.0 and KNX.

Although not particularly mentioned in the above disclosure, at least a part of the functions of the local control device 360 may be executed by a server disposed in the network 120. In other words, the local control device 360 may be provided through a cloud service.

## Claims

1. A blind apparatus comprising:
a slat on which a photovoltaic cell is disposed; and
a communicator configured to perform communication between the blind apparatus and a control device configured to control the blind apparatus, wherein
an information element comprised in a message used in the communication comprises an information element for specifying an operating state of the blind apparatus, and
the operating state comprises at least one selected from the group consisting of a first operating state in which an angle of the slat is adjusted to maximize generated power of the photovoltaic cell, a second operating state in which the angle of the slat maximizing the generated power of the photovoltaic cell is searched for, and a third operating state in which the angle of the slat is adjusted based on an illuminance and/or a temperature of a space in which the blind apparatus is installed.

2. The blind apparatus according to claim 1, wherein
the communicator receives, from the control device, a message instructing that the blind apparatus be controlled in the operating state as the message comprising the information element.

3. The blind apparatus according to claim 1 or 2, wherein
the communicator receives, from the control device, a message requesting the operating state applied to the blind apparatus as the message comprising the information element.

4. The blind apparatus according to any one of claims 1 to 3, wherein
the communicator transmits, to the control device, a message for a notification of the operating state applied to the blind apparatus as the message comprising the information element.

5. A blind apparatus comprising:
a slat on which a photovoltaic cell is disposed; and
a communicator configured to perform communication between the blind apparatus and a control device configured to control the blind apparatus, wherein
an information element comprised in a message used in the communication comprises an information element for specifying an abnormal state of the blind apparatus, and
the abnormal state comprises at least one selected from the group consisting of a first abnormal state caused by a temperature of a space in which the blind apparatus is installed, a second abnormal state caused by shaking of the slat and/or an impact to the slat, and a third abnormal state caused by contact with the slat and/or deformation of the slat.

6. The blind apparatus according to claim 5, wherein
the communicator receives, from the control device, a message requesting the abnormal state occurring in the blind apparatus as the message comprising the information element.

7. The blind apparatus according to claim 5 or 6, wherein
the communicator transmits, to the control device, a message for a notification of the abnormal state occurring in the blind apparatus as the message comprising the information element.

8. A blind apparatus comprising:
a slat on which a photovoltaic cell is disposed; and
a communicator configured to perform communication between the blind apparatus and a control device configured to control the blind apparatus, wherein
an information element comprised in a message used in the communication comprises an information element for specifying a grid interconnection state indicating whether the photovoltaic cell is interconnected with a power grid.

9. The blind apparatus according to claim 8, wherein
the communicator receives, from the control device, a message requesting the grid interconnection state as the message comprising the information element.

10. The blind apparatus according to claim 8 or 9, wherein
the communicator transmits, to the control device, a message for a notification of the grid interconnection state as the message comprising the information element.
